# FASCICULE DE BREVET EUROPEEN

(11) **EP 2 582 920 B1**
(45) Date de publication et mention de la délivrance du brevet: **10.12.2014**
(21) Numéro de dépôt: 11735508.1
(22) Date de dépôt: 16.06.2011
(51) Int. Cl.: F01D 5/26, F01D 9/04, F01D 25/24

(54) **SECTEUR ANGULAIRE DE REDRESSEUR POUR COMPRESSEUR DE TURBOMACHINE**
LEITSCHAUFELSEGMENT FÜR EINEN VERDICHTER EINER TURBOMASCHINE
GUIDE VANE SEGMENT FOR A TURBOMACHINE COMPRESSOR

(30) Priorité: 18.06.2010 FR 1054851
(43) Date de publication de la demande: 24.04.2013
(73) Titulaire: Snecma, 75015 Paris (FR)
(72) Inventeur: CLOAREC, Yvon, F-77250 Ecuelles (FR)
(74) Mandataire: Henrich, Christel
(86) Numéro de dépôt international: PCT/FR2011/051373
(87) Numéro de publication internationale: WO 2011/157957

(56) Documents cités:
- EP-A2- 1 811 131
- US-B1- 6 217 282

## Description

### Arrière-plan de l'invention

La présente invention concerne le domaine général des redresseurs pour compresseur de turbomachine, telle qu'un turboréacteur ou un turbopropulseur d'avion.

Un compresseur de turbomachine est constitué d'une pluralité d'étages de compression formés chacun d'une rangée annulaire d'aubes mobiles montées sur un arbre de la turbomachine et d'un redresseur monté sur un carter annulaire externe de la turbomachine.

Un redresseur de compresseur peut être constitué d'un anneau, ou il peut être sectorisé (i.e. constitué d'une pluralité de secteurs angulaires reliés bout-à-bout circonférentiellement autour de l'axe longitudinal du compresseur). Tout au long de la présente demande, on entendra par « secteur angulaire de redresseur » (ou « secteur de redresseur » pour plus de concision), tout secteur angulaire de redresseur dont l'angle est égal ou inférieur à 360°.

Chaque secteur de redresseur comprend une virole externe et une virole interne disposées coaxialement l'une à l'intérieur de l'autre, et une (ou plusieurs) pale(s) s'étendant radialement entre ces viroles et raccordée(s) à celles-ci par ses (leurs) extrémité(s) radiale(s).

Le montage de chaque secteur angulaire de redresseur sur le carter annulaire externe de la turbomachine est réalisé, par exemple, par le biais de pattes de montage prévues respectivement à chaque extrémité axiale de la virole externe dudit secteur et destinées à être engagées dans des gorges annulaires correspondantes du carter.

En fonctionnement, un tel secteur de redresseur est soumis à de fortes sollicitations mécaniques, tant statiques que vibratoires.

Dans des redresseurs connus de l'art antérieur dans lesquels les bords d'attaque et de fuite des pales sont raccordés à des parties très épaisses et très rigides de la virole externe, ces sollicitations mécaniques sont essentiellement reprises par les zones du bord d'attaque et du bord de fuite raccordées à la virole externe du secteur de redresseur. Comme ces zones de raccordement sont minces et peu résistantes, un risque existe que les bords d'attaque et de fuite soient endommagés, voire même détruits.

Le document EP 1,811,131 propose de soulager les bords d'attaque et de fuite des pales des secteurs de redresseurs en diminuant la rigidité à l'emplanture des pales du redresseur afin d'optimiser la transition des efforts depuis les pales vers la virole externe. Pour cela, les bords d'attaque et/ou de fuite des pales sont raccordés à des zones de la virole externe qui sont moins rigides que celles raccordées notamment aux pattes de montage de cette virole externe. Toutefois, cette solution n'apporte pas un amortissement suffisant au niveau des zones de raccordement des bords d'attaque et de fuite des pales sur la virole externe, pour éviter efficacement une rupture des pales due aux vibrations.

### Objet et résumé de l'invention

La présente invention a pour objectif de proposer un secteur angulaire de redresseur permettant de limiter efficacement les contraintes mécaniques auxquelles est soumise, en fonctionnement, chaque pale du secteur de redresseur et en particulier ses bords d'attaque et/ou de fuite.

Ce but est atteint avec un secteur angulaire de redresseur pour compresseur de turbomachine s'étendant autour d'un axe de symétrie radiale, comportant une virole externe et une virole interne disposées coaxialement l'une à l'intérieur de l'autre, et au moins une pale s'étendant radialement entre les dites viroles et raccordée à celles-ci par ses extrémités radiales, dans lequel la virole externe comporte, à chaque extrémité axiale, des moyens de montage du secteur angulaire de redresseur sur un carter de la turbomachine, dans lequel la virole externe comporte, à au moins une extrémité axiale, une cavité débouchant sur ladite extrémité axiale, ladite cavité s'étendant entre une languette radiale interne de la virole externe à laquelle est raccordée l'extrémité radiale externe de la pale et une languette radiale externe de la virole externe portant des moyens de montage du secteur angulaire de redresseur sur un carter de la turbomachine, ledit secteur angulaire étant caractérisé en ce qu'au moins un élément rapporté formant butée est logé au moins partiellement dans ladite cavité, ledit élément rapporté formant butée étant apte à limiter les déplacements radiaux de la languette radiale interne par contact et ainsi à modifier le comportement vibratoire de ladite languette radiale interne.

Dans la présente demande, sauf précision contraire, l'amont et l'aval sont définis par rapport au sens d'écoulement normal du gaz (de l'amont vers l'aval) à travers la turbomachine. Par ailleurs, on appelle axe de la turbomachine, l'axe de symétrie radiale de la turbomachine. La direction axiale correspond à la direction de l'axe de la turbomachine, et une direction radiale est une direction perpendiculaire à cet axe. De même, un plan axial est un plan contenant l'axe de la turbomachine et un plan radial est un plan perpendiculaire à cet axe. Sauf précision contraire, les adjectifs et adverbes axial, radial, axialement et radialement sont utilisés en référence aux directions axiale et radiale précitées. Enfin, sauf précision contraire, les adjectifs interne et externe sont utilisés en référence à une direction radiale de sorte que la partie ou la face interne (i.e. radialement interne) d'un élément est plus proche de l'axe de la turbomachine que la partie ou la face externe (i.e. radialement externe) du même élément.

Selon la présente invention, l'élément rapporté formant butée (ci-après « élément de butée ») constitue une entretoise rigide positionnée entre les languettes radiales interne et externe de la virole externe.

Selon un premier mode de fonctionnement, l'élément de butée est serré radialement contre la languette radiale interne et/ou la languette radiale externe. En d'autres termes, il existe, au repos, de faibles précontraintes entre l'élément de butée et la languette radiale interne et/ou l'élément de butée et la languette radiale externe. Le serrage maximum est toutefois optimisé de manière à permettre un montage et un démontage facile de l'élément de butée.

Selon un autre mode de fonctionnement de l'invention, l'élément rigide est en contact sans effort avec la languette radiale interne et/ou la languette radiale externe de la virole externe.

Selon encore un autre mode de fonctionnement, il existe, au repos, un faible jeu entre l'élément de butée et la languette radiale interne et/ou entre l'élément de butée et la languette radiale externe. Le jeu maximal est toutefois optimisé pour garantir une efficacité suffisante du système et éviter le battement et les risques d'usure qui en résultent. On notera que ce jeu permet de diminuer la rigidité de la liaison entre les pales et le carter de la turbomachine.

Dans tous les cas, l'encastrement entre l'élément de butée et la languette radiale interne et/ou la languette radiale externe doit être suffisamment peu rigide pour permettre des micro-déplacements de la languette radiale interne en fonctionnement, à savoir en présence de vibrations dans le redresseur. L'ensemble formé par la virole externe et l'élément de butée n'est donc pas un ensemble complètement rigide (i.e. il est non rigide). En d'autres termes, la languette radiale interne doit pouvoir se déplacer en va-et-vient de manière à provoquer des pertes et reprises de contact successives entre l'élément de butée et la virole externe. Ainsi lorsque, en fonctionnement, le redresseur est soumis à des vibrations, la languette radiale interne décolle (i.e. s'éloigne radialement de la languette radiale externe), modifiant ainsi l'encastrement entre la virole externe et l'élément de butée, puis revient vers sa position initiale, et ainsi de suite. Le martèlement entre l'élément de butée et la virole externe permet de modifier la fréquence du mode vibratoire, et évite ainsi une mise en résonance.

Conformément à la présente invention, l'élément de butée est donc apte à limiter les déplacements de la languette radiale interne de la virole externe et donc de la pale dans la direction radiale, et à maintenir ainsi les niveaux vibratoires en-deçà de valeurs maximales acceptables. Des dispositions de la présente invention, il résulte donc une meilleure tenue des pales aux contraintes mécaniques auxquelles elles sont soumises et une réduction des risques de ruptures des pales en fatigue vibratoire.

L'élément formant butée peut être facilement retiré et/ou remplacé, de sorte que l'usure de la virole externe peut être facilement contrôlée, et que la ou les surfaces d'appui peuvent être aisément reconditionnées.

Selon un mode de réalisation de l'invention, la virole externe comporte une cavité amont débouchant sur l'extrémité amont de la virole externe et une cavité aval débouchant sur l'extrémité aval de la virole externe, au moins un élément rapporté formant butée étant logé dans au moins une des dites cavités. Selon un exemple de réalisation, au moins un élément rapporté formant butée est logé dans chacune des cavités amont et aval de la virole externe.

Selon un mode de réalisation de l'invention, la virole externe est formée en une seule pièce. En d'autres termes, la languette radiale interne, la languette radiale externe et la portion médiane qui les rejoint sont une seule et même pièce. La virole externe peut par exemple être obtenue directement de fonderie. Selon une autre variante de réalisation, sa forme peut également résulter d'une opération d'usinage.

Selon un autre mode de réalisation, tout le secteur de redresseur peut être réalisé en une seule pièce. En d'autres termes, l'ensemble formé par la virole externe, la virole interne et la ou les pales constitue une structure monobloc, plus simple à réaliser et plus résistante qu'un ensemble de plusieurs pièces assemblées entre elles.

Selon un mode de réalisation, au moins l'une des extrémités radiales de l'élément de butée coopère par complémentarité de forme avec la virole externe, ce par quoi ledit élément est maintenu en position dans la direction axiale.

Par exemple, l'élément rapporté formant butée peut être une portion d'anneau présentant une forme oblongue dans un plan axial, dont les extrémités radiales interne et externe coopèrent respectivement avec une portion de gorge annulaire formée dans la languette radiale interne et une portion de gorge annulaire formée dans la languette radiale externe.

Selon un mode de réalisation, l'élément de butée est fixé sur la virole externe par une liaison brasée.

Selon un mode de réalisation de l'invention, l'élément de butée est une portion d'anneau dont l'une des extrémités radiales coopère avec une portion de gorge annulaire de forme correspondante prévue dans la virole externe et l'autre extrémité radiale est reliée à la virole externe par une liaison brasée.

Selon un autre mode de réalisation de l'invention, l'élément de butée est une portion d'anneau comprenant une base en portion de cylindre située en regard de la languette radiale interne, et une portion médiane s'étendant radialement vers l'extérieur depuis ladite base, jusqu'à la languette radiale externe de la virole externe. La base en portion de cylindre peut comporter au moins un embrèvement sur sa face radiale interne. Un tel embrèvement permet un gain de masse et une meilleure localisation des contacts entre l'élément de butée et la languette radiale interne de la virole externe.

L'invention concerne également un redresseur de turbomachine formé d'un ou d'une pluralité de secteurs angulaires de redresseur tels que définis précédemment. L'invention concerne encore une turbomachine comportant au moins un tel redresseur.

### Brève description des dessins

D'autres caractéristiques et avantages de l'invention ressortiront à la lecture de la description suivante d'exemples de réalisation de l'invention donnés à titre illustratif et non limitatif. Cette description fait référence aux feuilles de dessins annexées sur lesquelles :
- la figure 1 est une vue partielle et en coupe longitudinale d'un compresseur de turbomachine comprenant au moins un secteur angulaire de redresseur selon un premier mode de réalisation de l'invention ;
- les figures 2 à 4 sont des vues partielles et en coupe axiale de secteurs angulaires de redresseur selon d'autres modes de réalisation de l'invention.

### Description détaillée de modes de réalisation de l'invention

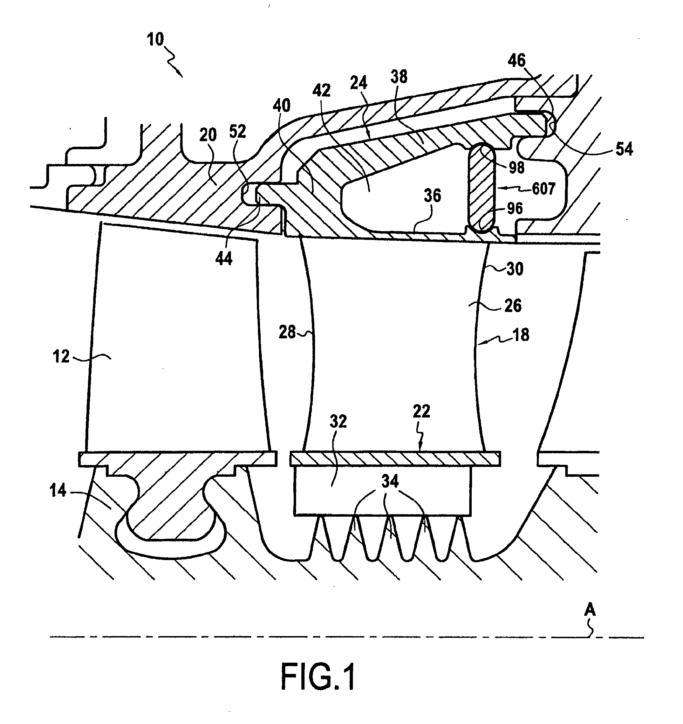

Le compresseur 10 représenté partiellement et schématiquement sur la figure 1 comprend plusieurs étages de compression dont deux seulement ont été représentés, chaque étage comprenant une rangée annulaire d'aubes mobiles 12 montées sur un disque 14 porté par l'arbre de rotor (non représenté) de la turbomachine, et un redresseur fixe 18 porté par un carter externe 20 de turbomachine et constitué par un ou une pluralité de secteurs angulaires de redresseurs mis circonférentiellement bout-à-bout. L'axe de symétrie radiale du compresseur est noté A sur la figure 1.

Un secteur de redresseur 18 tel que celui représenté sur la figure 1 comprend deux viroles coaxiales interne 22 et externe 24, par exemple en portion de cylindre, s'étendant l'une à l'intérieur de l'autre et reliées l'une à l'autre par une ou plusieurs pales radiales 26. Ces pales 26 ont une face concave ou intrados et une face convexe ou extrados qui sont reliées à leurs extrémités amont et aval en formant des bords d'attaque 28 et de fuite 30 de l'air qui s'écoule dans le compresseur 10.

La virole interne 22 porte sur sa surface interne un revêtement abradable 32 destiné à coopérer avec des léchettes radiales 34 portées par l'arbre de rotor (non représenté) afin d'éviter une possible recirculation des gaz sous la virole interne 22.

Dans l'exemple illustré sur la figure 1, la virole externe 24 du secteur de redresseur 18 est réalisée en une seule pièce et se compose d'une languette radiale interne 36 à laquelle sont reliées les extrémités radiales externes des pales 26, et d'une languette radiale externe 38 coaxiale à ladite languette radiale interne 36, lesquelles languettes sont reliées entre elles par une portion médiane 40.

Toujours dans l'exemple illustré, la portion médiane 40 est située à l'extrémité amont de la virole externe 24, de sorte que les extrémités amont des languettes radiales interne 36 et externe 38 lui sont directement rattachées. Une cavité 42, débouchant sur l'extrémité aval de la virole externe 36, est ainsi délimitée par les languettes radiales interne 36 et externe 38 (qui forment les parois de la cavité) et la portion médiane 40 (qui constitue le fond de la cavité).

A chacune de ses extrémités axiales, la virole externe 24 comporte des moyens de montage du secteur de redresseur 18 sur le carter 20 de la turbomachine. Sur la figure 1, ces moyens de montage comprennent une patte de montage amont 44 sous la forme d'une portion de cylindre s'étendant vers l'amont depuis la portion médiane 40, et une patte de montage aval 46 en forme de portion de cylindre formée à l'extrémité de la languette radiale externe. Chacune de ces pattes de montage 44, 46 s'étend en direction axiale et est destinée à coopérer avec une gorge correspondante 52, 54 du carter 20.

Selon l'invention, la cavité 42 de la virole externe 24 est destinée à recevoir un élément rapporté formant butée (ci-après « élément de butée »).

Dans l'exemple illustré sur la figure 1, l'élément de butée est une portion d'anneau 607 s'étendant circonférentiellement sur une partie seulement ou sur l'ensemble du secteur angulaire de redresseur. Comme il apparaît sur la figure 1, la portion d'anneau 607 présente, dans un plan axial, une forme oblongue.

Son montage sur le secteur angulaire de redresseur est par exemple effectué par glissement tangentiel entre deux portions de gorges annulaires 96, 98 formées en regard l'une de l'autre dans un plan radial, respectivement sur la languette radiale interne et sur la languette radiale externe de la virole externe.

Chaque portion de gorge annulaire présente, dans un plan axial, un profil complémentaire de celui de l'une des extrémités radiales de la portion d'anneau 607. Ce montage assure le maintien en position de la portion d'anneau 607, dans la direction axiale, à l'intérieur de la cavité 42. Avantageusement, les portions de gorges annulaires 96, 98 peuvent être recouvertes d'une protection contre l'usure due aux frottements et aux chocs avec l'élément de butée 607, par exemple un lubrifiant, un verni ou encore un dépôt de carbure.

L'élément de butée 607 est un élément rigide. Dans l'exemple, il est en contact sans effort avec la languette radiale interne 36 et la languette radiale externe 38. Selon d'autres exemples de réalisation, un faible jeu peut être prévu entre l'élément de butée et la languette radiale interne et/ou entre l'élément de butée et la languette radiale externe. Selon encore un autre exemple de réalisation, l'élément de butée peut être légèrement serré radialement entre la languette radiale interne et la languette radiale externe.

L'encastrement entre l'élément de butée et la languette radiale interne n'étant pas totalement rigide, celle-ci peut décoller radialement, en cas de sollicitations vibratoires. Ses micro-déplacements entraînent une succession de pertes et de reprises du contact avec l'élément de butée, qui modifient la fréquence du mode vibratoire et l'empêchent d'entrer en résonance.

Plus les déplacements de la languette radiale interne sont importants, plus l'effet d'amortissement est amélioré. Par ailleurs, un jeu (prévu à la fabrication ou du à une usure éventuelle) entre la virole externe et l'élément de butée est plus facilement comblé lorsque les déplacements de la languette radiale interne sont importants,

On notera que les déplacements radiaux de la languette radiale interne 36 sont favorisés par la faible épaisseur de cette languette et/ou par la présence de saignées (non représentées) dans la virole externe, entre les différentes pales du secteur de redresseur. Ces saignées favorisent en effet le basculement de la languette radiale interne en empêchant la reprise des moments fléchissants.

L'élément de butée 607, qui forme une entretoise rigide entre les languettes radiales interne et externe, permet donc de contrarier le mode vibratoire de la pale 26. Il procure une capacité d'amortissement qui limite les déplacements maximum des pales dans la direction radiale et donc les contraintes mécaniques auxquelles celles-ci sont soumises en fonctionnement.

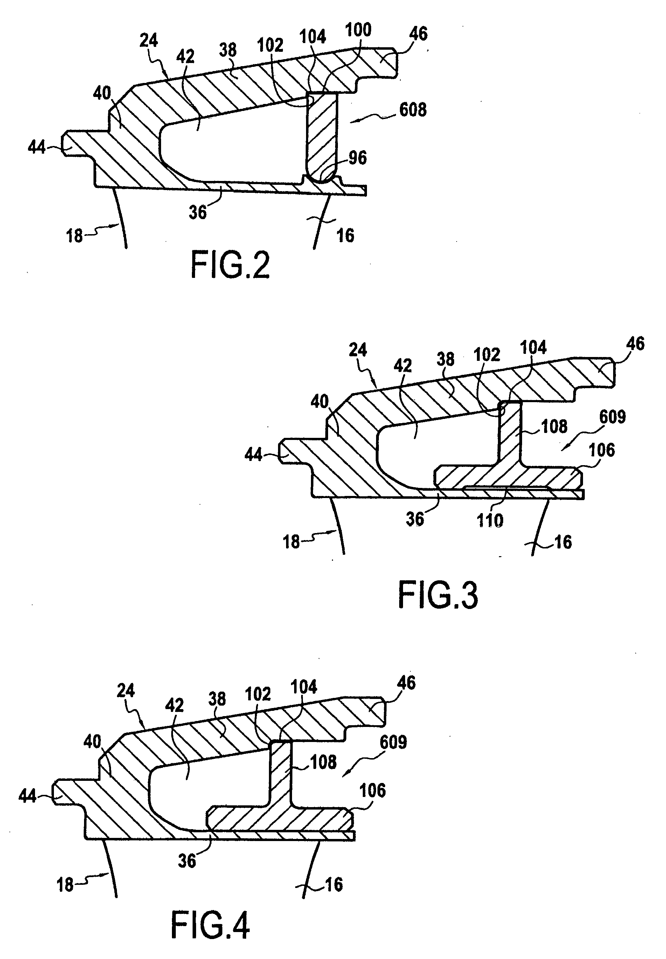

La figure 2 illustre un autre exemple de réalisation dans lequel l'élément de butée est une portion d'anneau 608 sensiblement identique à celle décrite en liaison avec la figure 1, mais dont l'extrémité radiale externe comporte une surface plane 100 apte à venir en appui sur la face interne de la languette radiale externe 38 et à y être fixée par une liaison brasée (schématisée par le cordon de brasure 104). L'extrémité radiale interne est, elle, maintenue à l'intérieur d'une portion de gorge annulaire 96 de forme correspondante formée dans la languette radiale interne 36.

Comme il ressort de la figure 2, un épaulement 102 formé dans la languette radiale externe permet le bon positionnement axial de la portion d'anneau 608 avant l'étape de brasage, par le fait que l'extrémité radiale externe de la portion d'anneau 608 vient en appui contre l'épaulement 102.

Le maintien en position de la portion d'anneau à l'intérieur de la cavité 42 de la virole externe 24 est obtenu ici par la liaison brasée. Une telle liaison permet d'éviter l'utilisation d'un taquet de rétention tangentiel ou axial pour maintenir en position l'élément de butée. L'opération de brasage peut être réalisée concomitamment à celle généralement effectuée sur le revêtement abradable 32 de la virole interne 22. De plus, au moment de l'opération de brasage, l'élément de butée est plaqué contre la languette de la virole externe 24 avec laquelle il doit interagir. La pression de contact peut notamment être ajustée par mise en contrainte de l'élément de butée au moment du brasage. Les tolérances de fabrication peuvent donc être élargies. Enfin, la virole externe se trouve rigidifiée grâce à la liaison brasée, ce qui permet une transmission d'une partie des efforts provenant des pales 26 vers le carter, et ceci, soit en fonctionnement normal et exceptionnel (pompage, etc.), soit uniquement en cas de fonctionnement exceptionnel.

Le fonctionnement de l'élément de butée 608 est, pour le reste, identique à celui décrit en liaison avec l'élément 607 de la figure 1.

La figure 3 illustre un troisième mode de réalisation de l'invention, dans lequel l'élément de butée est une portion d'anneau 609 présentant une section axiale en T, constituée d'une base en portion de cylindre 106 située en regard de la face externe de la languette radiale interne 36, et d'une portion médiane 108, s'étendant radialement vers l'extérieur approximativement depuis le milieu de la base en portion de cylindre 106, jusqu'à la languette radiale externe 38. Dans l'exemple, l'extrémité radiale externe de la portion médiane 108 est reliée par brasage à la languette radiale externe 38.

Comme dans le mode de réalisation de la figure 2, un épaulement 102 formé dans la languette radiale externe 38 permet le bon positionnement axial de la portion d'anneau 609 avant l'étape de brasage.

Dans l'exemple de la figure 3, un embrèvement 110 est prévu sur la face interne de la base 106, de manière à améliorer la localisation des contacts entre l'élément de butée 609 et la virole externe 24. Le fonctionnement de l'élément de butée 609 est, pour le reste, identique à celui décrit en liaison avec l'élément 607 de la figure 1.

Selon une variante illustrée sur la figure 4, la face interne de la base en portion de cylindre 106 peut être dépourvue d'embrèvement. Cette configuration est particulièrement adaptée au cas où, dans un but d'optimisation de la masse, des ouvertures ont été ménagées dans la languette radiale externe 38 de la virole externe 24, ces ouvertures débouchant vers la cavité morte de la turbomachine (i.e. la zone de la turbomachine dans laquelle les gaz ne circulent pas). La configuration de l'élément de butée 609 telle que représentée sur la figure 4 améliore l'étanchéité en direction de la cavité morte, mais également du côté libre de la virole externe, permettant ainsi d'éviter les phénomènes de recirculation.

Dans l'ensemble des exemples représentés et décrits précédemment, les bords de fuite 30 des pales 26 sont rattachés à l'extrémité distale de la languette radiale interne 36 (ici son extrémité aval, qui est éloignée de la portion médiane, plus rigide). Les bords de fuite 30 sont donc rattachés à une partie de la virole externe 24 qui est moins rigide que celle à laquelle sont reliés les bords d'attaque 28 des pales. Cette configuration est particulièrement adaptée au cas où les bords de fuite 30 des pales 26 sont soumis, en fonctionnement, à des déplacements radiaux plus importants que ceux auxquels sont soumis les bords d'attaque 28.

On pourrait envisager, au contraire, que la virole externe 24 comporte une portion médiane à son extrémité aval et une cavité débouchant vers son extrémité amont. Dans ce cas, les bords d'attaque 28 des pales 26 sont rattachés à une partie de la virole externe 24 (l'extrémité distale de la languette radiale interne 36) moins rigide que celle (l'extrémité de la languette radiale interne raccordées à la portion médiane 40) à laquelle sont raccordés les bords de fuite 30 des pales 26. Cette configuration est particulièrement adaptée lorsque les bords d'attaque 28 des pales 26 sont soumis, en fonctionnement, à des déplacements radiaux plus importants que ceux auxquels sont soumis les bords de fuite 30.

On pourrait encore envisager que la portion médiane 40 soit située à distance des extrémités axiales de la virole externe 24, et de préférence sensiblement au centre de ladite virole 24, prise dans sa direction axiale.

Dans ce cas, la virole externe 24 comporte deux cavités, l'une amont, débouchant sur l'extrémité amont de la virole externe, et l'autre aval, débouchant sur son extrémité aval. Chaque languette radiale de la virole externe est alors composée de deux parties de languettes, l'une amont, l'autre aval, reliées entre elles par le biais de la portion médiane. La cavité amont est délimitée par une partie de languette radiale interne amont, une partie de virole radiale externe amont, et la portion médiane. De la même manière, la cavité aval est délimitée par une partie de languette radiale interne aval, une partie de languette radiale externe aval et la portion médiane.

On pourra envisager qu'un ou plusieurs éléments rapportés formant amortisseurs soient disposés dans l'une seulement des deux cavités. On pourra également envisager qu'au moins un élément amortisseur soit rapporté dans chacune des cavités de la virole externe.

Cette configuration est notamment adaptée dans le cas où tant les bords d'attaque 28 que les bords de fuite 30 des pales 26 sont soumis à des activités vibratoires importantes, de sorte que des modes vibratoires totalement découplés sont susceptibles d'entrer en résonance séparément au niveau de ces bords d'attaque et de fuite 28, 30.

On notera que l'introduction d'un élément formant butée dans une cavité de la virole externe est d'autant plus aisée que la hauteur et la profondeur de cette cavité sont importantes.

Dans l'ensemble des exemples illustrés, les moyens de montage amont et aval 44, 46 du secteur de redresseur 18 sur le carter 20 de la turbomachine ont donc été décalés l'un par rapport à l'autre dans la direction radiale. De la figure 1, il ressort en particulier que la jonction entre la patte de montage aval 46 (i.e. la patte de montage portée par la languette radiale externe 38, et située du côté de la cavité 42) et la rainure correspondante 54 du carter a été relevée.

Cette disposition permet d'augmenter la hauteur (prise dans la direction radiale) de la virole externe, et donc de la cavité 42.

Dans le cas où la cavité est réalisée par usinage, cette disposition permet, en outre, d'augmenter la profondeur de la cavité 42. En raison des contraintes d'usinage (contraintes notamment liées à l'outillage particulier utilisé), en effet, la hauteur de la cavité 42 conditionne sa profondeur. Plus la hauteur de la cavité 42 est importante, plus la profondeur de la cavité peut être importante également et plus les déplacements radiaux exploités par l'amortisseur seront grands.

## Revendications

1. Secteur angulaire de redresseur (18) pour compresseur de turbomachine s'étendant autour d'un axe de symétrie radiale (A), comportant :
- une virole externe (24) et une virole interne (22) disposées coaxialement l'une à l'intérieur de l'autre, et
- au moins une pale (26) s'étendant radialement entre les dites viroles (22, 24) et raccordée à celles-ci par ses extrémités radiales,
dans lequel la virole externe (24) comporte, à chaque extrémité axiale, des moyens de montage (44, 46) du secteur angulaire de redresseur (18) sur un carter (20) de la turbomachine, et
dans lequel la virole externe (24) comporte, à au moins une extrémité axiale, une cavité (42) débouchant sur ladite extrémité axiale, ladite cavité (42) s'étendant entre une languette radiale interne (36) de la virole externe (24) à laquelle est raccordée l'extrémité radiale externe de la pale (26) et une languette radiale externe (38) de la virole externe (24) portant des moyens de montage (46) du secteur angulaire de redresseur (18) sur un carter (20) de la turbomachine,
ledit secteur angulaire étant **caractérisé en ce qu'**au moins un élément rapporté (607, 608, 609) formant butée est logé au moins partiellement dans ladite cavité (42), ledit élément rapporté formant butée (607, 608, 609) étant apte à limiter les déplacements radiaux de la languette radiale interne par contact et ainsi à modifier le comportement vibratoire de ladite languette radiale interne (36).

2. Secteur angulaire de redresseur selon la revendication 1, dans lequel la virole externe (24) comporte une cavité amont débouchant sur l'extrémité amont de la virole externe et une cavité aval débouchant sur l'extrémité aval de la virole externe, au moins un élément rapporté formant butée (607, 608, 609) étant logé dans au moins une des dites cavités.

3. Secteur angulaire de redresseur selon la revendication 1 ou 2, dans lequel la virole externe (24) est formée en une seule pièce.

4. Secteur angulaire de redresseur selon l'une quelconque des revendications 1 à 3, dans lequel il existe un jeu entre l'élément rapporté formant butée (607, 608, 609) et la languette radiale interne (36) et/ou entre l'élément rapporté formant butée et la languette radiale externe (38) de la virole externe (24).

5. Secteur angulaire de redresseur selon l'une quelconque des revendications 1 à 4, dans lequel l'élément rapporté formant butée (607, 608, 609) est en contact sans effort avec la languette radiale interne (36) et/ou la languette radiale externe (38) de la virole externe (24).

6. Secteur angulaire de redresseur selon l'une quelconque des revendications 1 à 3, dans lequel l'élément rapporté formant butée (607, 608, 609) est serré radialement contre la languette radiale interne (36) et/ou la languette radiale externe (38) de la virole externe (24).

7. Secteur angulaire de redresseur selon l'une quelconque des revendications 1 à 6, dans lequel au moins l'une des extrémités radiales de l'élément rapporté formant butée coopère par complémentarité de forme avec la virole externe (24), ce par quoi ledit élément est maintenu en position dans la direction axiale.

8. Secteur angulaire de redresseur selon l'une quelconque des revendications 1 à 7, dans lequel une extrémité radiale de l'élément rapporté formant butée (608, 609) est fixée sur la virole externe (24) par une liaison brasée.

9. Secteur angulaire de redresseur selon la revendication 8, dans lequel ladite liaison brasée relie l'élément rapporté formant butée (608, 609) et la languette radiale externe (38) de la virole externe (24).

10. Secteur angulaire de redresseur selon l'une quelconque des revendications 1 à 7, dans lequel l'élément rapporté formant butée est une portion d'anneau (607) présentant une forme oblongue dans un plan axial, et les extrémités radiales interne et externe de ladite portion d'anneau (607) coopèrent respectivement avec une portion de gorge annulaire formée dans la languette radiale interne et une portion de gorge annulaire formée dans la languette radiale externe.

11. Secteur angulaire de redresseur selon l'une quelconque des revendications 1 à 9, dans lequel l'élément rapporté formant butée est une portion d'anneau (608) dont l'une des extrémités radiales coopère avec une portion de gorge annulaire de forme correspondante prévue dans la virole externe (24), et l'autre extrémité radiale est reliée à la virole externe par une liaison brasée.

12. Secteur angulaire de redresseur selon l'une quelconque des revendications 1 à 9, dans lequel l'élément rapporté formant butée est une portion d'anneau (609) comprenant une base en portion de cylindre (106) située en regard de la languette radiale interne (36), et une portion médiane (108) s'étendant radialement vers l'extérieur depuis ladite base (106) jusqu'à la languette radiale externe (38) de la virole externe (24).

13. Secteur angulaire de redresseur selon la revendication 12, dans lequel ladite base en portion de cylindre (106) comporte au moins un embrèvement (110) sur sa face radiale interne.

14. Redresseur de turbomachine formé d'un ou d'une pluralité de secteurs angulaires de redresseur selon l'une quelconque des revendications 1 à 13.

15. Turbomachine comportant au moins un redresseur selon la revendication 14.

## Patentansprüche

1. Leitapparat-Winkelsegment (18) für einen Turbomaschinenverdichter, das sich um eine radiale Symmetrieachse (A) erstreckt, umfassend
- einen Außenring (24) und einen Innenring (22), die koaxial ineinander angeordnet sind, und
- wenigstens eine Schaufel (26), die sich zwischen den Ringen (22, 24) radial erstreckt und über ihre radialen Enden mit diesen verbunden ist,
wobei der Außenring (24) an jedem axialen Ende Mittel zum Anbringen (44, 46) des Leitapparat-Winkelsegments (18) an einem Gehäuse (20) der Turbomaschine umfasst, und
wobei der Außenring (24) an wenigstens einem axialen Ende einen Hohlraum (42), der an dem axialen Ende ausmündet, umfasst, wobei der Hohlraum (42) sich zwischen einer radialen inneren Leiste (36) des Außenrings (24), mit der das radiale äußere Ende der Schaufel (26) verbunden ist, und einer radialen äußeren Leiste (38) des Außenrings (24), die Mittel zum Anbringen (46) des Leitapparat-Winkelsegments (18) an einem Gehäuse (20) der Turbomaschine trägt, erstreckt,
wobei das Winkelsegment **dadurch gekennzeichnet ist, dass** wenigstens ein einen Anschlag bildendes angesetztes Element (607, 608, 609) wenigstens teilweise in dem Hohlraum (42) aufgenommen ist, wobei das einen Anschlag bildende angesetzte Element (607, 608, 609) geeignet ist, die Radialbewegungen der radialen inneren Leiste durch Kontakt zu begrenzen und somit das Schwingungsverhalten der radialen inneren Leiste (36) zu verändern.

2. Leitapparat-Winkelsegment nach Anspruch 1, wobei der Außenring (24) einen stromaufwärtigen Hohlraum, der an dem stromaufwärtigen Ende des Außenrings ausmündet, und einen stromabwärtigen Hohlraum, der an dem stromabwärtigen Ende des Außenrings ausmündet, umfasst, wobei wenigstens ein einen Anschlag bildendes angesetztes Element (607, 608, 609) in wenigstens einem der Hohlräume aufgenommen ist.

3. Leitapparat-Winkelsegment nach Anspruch 1 oder 2, wobei der Außenring (24) einstückig ausgebildet ist.

4. Leitapparat-Winkelsegment nach einem der Ansprüche 1 bis 3, wobei zwischen dem einen Anschlag bildenden angesetzten Element (607, 608, 609) und der radialen inneren Leiste (36) und/oder zwischen dem einen Anschlag bildenden angesetzten Element und der radialen äußeren Leiste (38) des Außenrings (24) ein Spiel vorhanden ist.

5. Leitapparat-Winkelsegment nach einem der Ansprüche 1 bis 4, wobei das einen Anschlag bildende angesetzte Element (607, 608, 609) mit der radialen inneren Leiste (36) und/oder der radialen äußeren Leiste (38) des Außenrings (24) kraftfrei in Kontakt steht.

6. Leitapparat-Winkelsegment nach einem der Ansprüche 1 bis 3, wobei das einen Anschlag bildende angesetzte Element (607, 608, 609) radial gegen die radiale innere Leiste (36) und/oder die radiale äußere Leiste (38) des Außenrings (24) geklemmt ist.

7. Leitapparat-Winkelsegment nach einem der Ansprüche 1 bis 6, wobei wenigstens eines der radialen Enden des einen Anschlag bildenden angesetzten Elements durch Formergänzung mit dem Außenring (24) zusammenwirkt, wodurch das Element in der axialen Richtung in Position gehalten wird.

8. Leitapparat-Winkelsegment nach einem der Ansprüche 1 bis 7, wobei ein radiales Ende des einen Anschlag bildenden angesetzten Elements (608, 609) an dem Außenring (24) durch eine Lötverbindung befestigt ist.

9. Leitapparat-Winkelsegment nach Anspruch 8, wobei die Lötverbindung das einen Anschlag bildende angesetzte Element (608, 609) und die radiale äußere Leiste (38) des Außenrings (24) verbindet.

10. Leitapparat-Winkelsegment nach einem der Ansprüche 1 bis 7, wobei das einen Anschlag bildende angesetzte Element ein Ringabschnitt (607) mit einer länglichen Form in einer Axialebene ist und das radiale innere und das radiale äußere Ende des Ringabschnitts (607) mit einem Ringnutabschnitt, der in der radialen inneren Leiste ausgebildet ist, bzw. einem Ringnutabschnitt, der in der radialen äußeren Leiste ausgebildet ist, zusammenwirken.

11. Leitapparat-Winkelsegment nach einem der Ansprüche 1 bis 9, wobei das einen Anschlag bildende angesetzte Element ein Ringabschnitt (608) ist, wovon eines der radialen Enden mit einem Ringnutabschnitt entsprechender Form, der in dem Außenring (24) vorgesehen ist, zusammenwirkt, und das andere radiale Ende durch eine Lötverbindung mit dem Außenring verbunden ist.

12. Leitapparat-Winkelsegment nach einem der Ansprüche 1 bis 9, wobei das einen Anschlag bildende angesetzte Element ein Ringabschnitt (609) ist, der eine zylinderabschnittsförmige Basis (106), welche der radialen inneren Leiste (36) gegenüberliegt, und einen Mittelabschnitt (108), welcher sich von der Basis (106) aus radial nach außen bis zu der radialen äußeren Leiste (38) des Außenrings (24) erstreckt, umfasst.

13. Leitapparat-Winkelsegment nach Anspruch 12, wobei die zylinderabschnittsförmige Basis (160) wenigstens eine Senkung (110) an ihrer radialen Innenseite umfasst.

14. Leitapparat einer Turbomaschine, der von einem oder einer Vielzahl von Leitapparat-Winkelsegmenten nach einem der Ansprüche 1 bis 13 gebildet ist.

15. Turbomaschine, die wenigstens einen Leitapparat nach Anspruch 14 umfasst.

## Claims

1. A stator angular sector (18) for a turbine engine compressor, the sector extending around an axis of radial symmetry (A) and comprising:
· an outer shroud (24) and an inner shroud (22) arranged coaxially one inside the other; and
· at least one vane (26) extending radially between said shrouds (22, 24) and connected thereto at its radial ends;
in which the outer shroud (24) has mounting means (44, 46) at each of its axial ends for mounting the stator angular sector (18) to a casing (20) of the engine; and
in which the outer shroud (24) includes, at at least one axial end, a cavity (42) opening out to said axial end, said cavity (42) extending between a radially-inner tongue (36) of the outer shroud (24) to which the radially-outer end of the vane (36) is connected and a radially-outer tongue (28) of the outer shroud (24) carrying the mounting means (46) for mounting the stator angular sector (18) to a casing (20) of the engine; and
the sector being **characterized in that** at least one abutment-forming insert (607, 608, 609) is housed at least in part in said cavity (42), said abutment-forming insert (607, 608, 609) being suitable for limiting the radial movements of the radially-inner tongue by contact and thus for modifying the vibratory behavior of said radially-inner tongue (36).

2. A stator angular sector according to claim 1, wherein the outer shroud (24) includes an upstream cavity opening out to the upstream end of the outer shroud and a downstream cavity opening out to the downstream end of the outer shroud, at least one abutment-forming insert (607, 608, 609) being housed in at least one of said cavities.

3. A stator angular sector according to claim 1 or claim 2, wherein the outer shroud (24) is made as a single piece.

4. A stator angular sector according to any one of claims 1 to 3, wherein clearance exists between the abutment-forming insert (607, 608, 609) and the radially-inner tongue (36) and/or between the abutment-forming insert and the radially-outer tongue (38) of the outer shroud (24).

5. A stator angular sector according to any one of claims 1 to 4, wherein the abutment-forming insert (607, 608, 609) is in effortless contact with the radially-inner tongue (36) and/or the radially-outer tongue (38) of the outer shroud (24).

6. A stator angular sector according to any one of claims 1 to 3, wherein the abutment-forming insert (607, 608, 609) is clamped radially against the radially-inner tongue (36) and/or the radially-outer tongue (38) of the outer shroud (24).

7. A stator angular sector according to any one of claims 1 to 6, wherein at least one of the radial ends of the abutment-forming insert co-operates by complementary shapes with the outer shroud (24), whereby said insert is held in position in the axial direction.

8. A stator angular sector according to any one of claims 1 to 7, wherein a radial end of the abutment-forming insert (608, 609) is fastened to the outer shroud (24) by a brazed connection.

9. A stator angular sector according to claim 8, wherein said brazed connection connects the abutment-forming insert (608, 609) to the radially-outer tongue (38) of the outer shroud (24).

10. A stator angular sector according to any one of claims 1 to 7, wherein the abutment-forming insert is a ring portion (607) having an oblong shape in an axial plane, and the radially-inner and -outer ends of said ring portion (607) co-operate with respective annular groove portions formed in the radially-inner tongue and in the radially-outer tongue.

11. A stator angular sector according to any one of claims 1 to 9, wherein the abutment-forming insert is a ring portion (608) having one of its radial ends cooperating with an annular groove portion of complementary shape provided in the outer shroud (24), and its other radial end connected to the outer shroud by a brazed connection.

12. A stator angular sector according to any one of claims 1 to 9, wherein the abutment-forming insert is a ring portion (609) having a base (106) forming a portion of a cylinder situated facing the radially-inner tongue (36), and a middle portion (108) extending radially outwards from said base (106) to the radially-outer tongue (38) of the outer shroud (24).

13. A stator angular sector according to claim 12, wherein said base (106) forming a portion of a cylinder includes at least one indentation (110) in its radially-inner face.

14. A turbine engine stator made up one or more stator angular sectors according to any one of claims 1 to 13.

15. A turbine engine including at least one stator according to claim 14.
